# FASCICULE DE BREVET EUROPEEN

(11) **EP 3 097 006 B1**
(45) Date de publication et mention de la délivrance du brevet: **17.10.2018**
(21) Numéro de dépôt: 14815893.4
(22) Date de dépôt: 27.11.2014
(51) Int. Cl.: B62M 3/08

(54) **PEDALE DE BICYCLETTE A ENCLENCHEMENT ET DECLENCHEMENT AUTOMATIQUES**
FAHRRADPEDAL MIT AUTOMATISCHER ARRETIERUNG UND LÖSUNG
BICYCLE PEDAL WITH AUTOMATIC ENGAGEMENT AND DISENGAGEMENT

(30) Priorité: 04.12.2013 FR 1362103
(43) Date de publication de la demande: 30.11.2016
(73) Titulaire: Time Sport International, 38090 Vaulx Milieu (FR)
(72) Inventeur: SERVIGNAT, Hervé, F-38300 Succieu (FR); CHAPPUIS, Fabien, F-38110 Saint Jean De Soudain (FR)
(74) Mandataire: Novaimo
(86) Numéro de dépôt international: PCT/IB2014/066388
(87) Numéro de publication internationale: WO 2015/083049

(56) Documents cités:
- EP-A1- 2 607 222
- WO-A1-90/10571
- FR-A1- 2 619 781
- FR-A1- 2 699 492
- FR-A1- 2 862 041
- US-A1- 2012 125 148

## Description

L'invention est relative à une pédale de bicyclette à enclenchement et déclenchement automatiques, du genre de celles qui comprennent un corps avec manchon monté rotatif sur un axe de pédale avec :
- un moyen de butée frontale propre à coopérer avec une surface de butée conjuguée prévue sur une cale fixée sous la semelle de chaussure de l'utilisateur ;
- un organe de maintien monté rotatif autour d'un axe géométrique parallèle à, et en arrière de, l'axe de la pédale, cet organe de maintien étant propre à être appliqué contre la cale par un moyen élastique, en particulier un élément de flexion, pour assurer l'accrochage de la cale à la pédale,
- un cliquet, situé en arrière de l'axe de la pédale, propre à retenir l'organe de maintien dans une position ouverte lors du dégagement de la cale à l'encontre du rappel élastique, et à libérer cet organe de maintien lors de l'engagement de la cale.

FR 2 862 041, qui est considéré comme l'état de la technique le plus proche de l'objet de la revendication 1, ainsi que EP 2 607 222, au nom de la Société déposante, montrent une pédale de ce type. Lorsqu'un cycliste souhaite accrocher la cale d'une de ses chaussures à la pédale, il effectue aisément cette opération, sans rencontrer de résistance sensible, puisque l'organe de maintien est retenu en position ouverte par le cliquet. Bien qu'une pédale conforme à ces documents donne satisfaction, il est souhaitable d'y apporter une seconde fonction en vue de réduire les risques de décrochage intempestif.

Selon l'invention, une pédale de bicyclette du genre défini précédemment est caractérisée en ce que le cliquet comporte un prolongement vers l'avant de la pédale, incurvé pour passer sous le manchon de l'axe de la pédale et se relevant en avant du manchon pour constituer une butée s'opposant au recul de la cale et de la chaussure, la cale comportant une partie en saillie vers le bas propre à coopérer avec ledit prolongement, lorsque le cliquet est abaissé et la cale fixée à la pédale.

Avantageusement, le prolongement du cliquet comporte deux branches reliées entre elles à l'arrière et à l'avant. Un moyen de rappel élastique du cliquet en position de blocage est prévu, en particulier sous la forme d'une lame ressort encastrée dans la partie arrière du cliquet et prenant appui vers l'avant sous le manchon du corps de pédale.

De préférence, les branches du cliquet sont munies, en arrière de l'axe de la pédale, de pions alignés orientés vers l'extérieur, servant d'articulation du cliquet sur le corps de pédale.

Le moyen élastique de rappel de l'organe de maintien est avantageusement formé par une lame élastique de flexion.

Le cliquet comportant le prolongement vers l'avant devient une pièce en bascule permettant donc d'offrir en une seule pièce deux fonctions cinématiquement liées :
- la partie arrière de la pièce en bascule a une fonction de pré-ouverture du mécanisme d'enclenchement du crochet de la cale, c'est-à-dire une « fonction cliquet » proprement dite,
- alors que partie avant de la pièce en bascule a une fonction de butée escamotable d'anti-recul de la cale une fois celle-ci enclenchée.

Le corps de pédale peut présenter vers l'avant, de chaque côté, une branche tronquée, les branches ne se rejoignant pas et délimitant un espace ouvert vers l'avant.

L'invention concerne également un cliquet pour pédale de bicyclette à enclenchement et déclenchement automatiques, caractérisé en ce qu'il comporte une partie arrière, propre à retenir l'organe de maintien de la pédale dans une position ouverte, et un prolongement vers l'avant, incurvé pour passer sous le manchon de l'axe de la pédale, et se relevant en avant du manchon pour constituer une butée.

Avantageusement, le prolongement du cliquet comporte deux branches reliées entre elles à l'arrière et à l'avant. Un moyen de rappel élastique du cliquet en position de blocage est prévu, en particulier sous la forme d'une lame ressort encastrée dans la partie arrière du cliquet et prévu pour prendre appui vers l'avant sous le manchon du corps de pédale.

De préférence, les branches du cliquet sont munies, en arrière de l'axe de la pédale, de pions alignés orientés vers l'extérieur, servant d'articulation du cliquet sur le corps de pédale.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une vue de dessus d'une pédale selon l'invention.
Fig. 2 est une vue de dessous de la pédale de Fig. 1.
Fig. 3 est une vue en coupe selon la ligne III-III de Fig. 1, de la pédale à plus grande échelle.
Fig. 4 montre, semblablement à Fig. 3, le début de la mise en place de la cale sur la pédale.
Fig. 5 montre, semblablement à Fig. 3, la pédale avec la cale accrochée.
Fig. 6 est une vue en perspective à échelle différente, du cliquet.
Fig. 7 est une vue de dessous, à plus petite échelle, du cliquet de Fig. 6.
Fig. 8 est une vue de côté, à plus petite échelle, du cliquet de Fig. 6.
Fig.9 est une vue de dessus d'une variante de construction de la pédale selon l'invention, et
Fig. 10 est une coupe suivant la ligne X-X de Fig. 9.

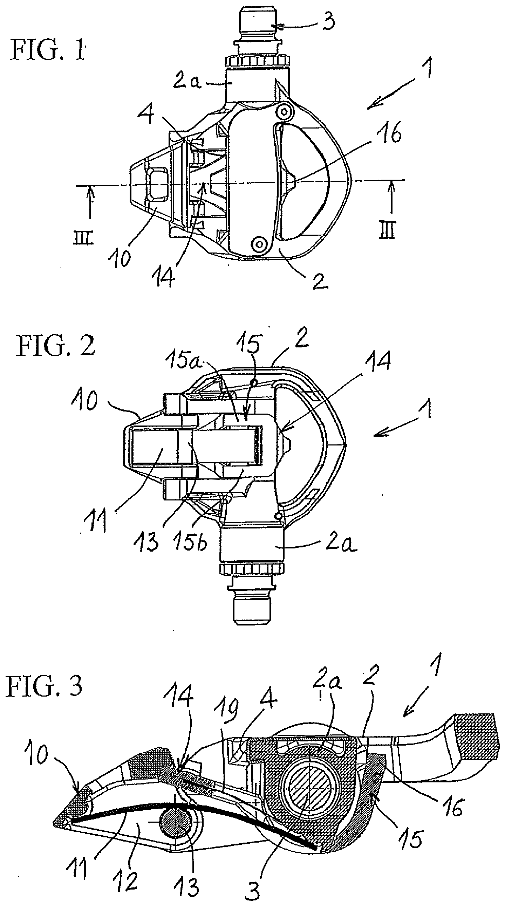

En se reportant aux dessins, notamment à Fig. 1-5, on peut voir une pédale 1 de bicyclette à enclenchement et déclenchement automatiques. La pédale représentée est destinée à être montée du côté droit de la bicyclette. La constitution de la pédale gauche serait similaire, symétrique par rapport à un plan vertical longitudinal.

Les termes "avant" et "arrière" utilisés dans la description et les revendications sont à comprendre pour une pédale en position horizontale montée sur une bicyclette, et selon le sens de progression normale de la bicyclette.

La pédale 1 comprend un corps 2 avec manchon cylindrique 2a monté rotatif sur un axe 3 qui fait saillie d'un côté du corps par une partie filetée prévue pour le montage à l'extrémité d'une manivelle. Une tôle d'appui métallique B est avantageusement prévue sur le corps 2, notamment lorsque ce corps est en alliage léger, ou en matériau composite ou en matière plastique.

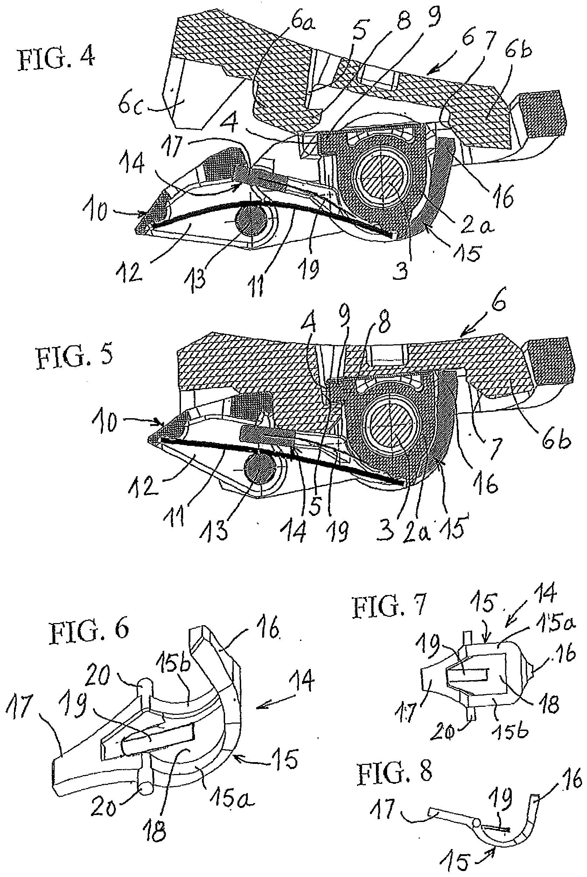

La pédale 1 comporte, sur au moins une face du corps, un moyen de butée frontale 4 propre à coopérer avec une surface de butée conjuguée 5 (Fig. 4 et 5) prévue sur une cale 6 fixée sous la semelle (non représentée) de la chaussure du cycliste. La cale 6 comporte une partie 6a en saillie vers le bas, venant en arrière de l'axe de la pédale et formant came. La cale 6 comporte à l'avant une partie 6b, compacte et globalement centrée selon l'axe longitudinal de la cale, également en saillie vers le bas qui, au moment de l'engagement de la cale 6 pour l'accrochage comme illustré sur Fig. 4, peut venir en butée contre l'extrémité de l'arc avant de la pédale 1 pour guider et faciliter l'accrochage. La cale 6 comporte, à l'arrière, de chaque côté, une partie en saillie vers le bas 6c propre à définir avec la saillie avant 6b un plan d'appui pour faciliter la marche du cycliste en évitant le contact de la saillie 6a avec le sol. La saillie 6b comporte, vers l'arrière, un pan coupé 7 facilitant la mise en place.

La saillie 6a comporte, en partie basse, un bec 8 proéminent vers l'avant propre à s'accrocher sous un rebord 9 du corps de pédale tourné vers l'arrière.

Un organe de maintien 10, monté mobile en rotation autour d'un axe géométrique parallèle à celui de la pédale et situé en arrière de cet axe de pédale, est prévu pour être appliqué par un moyen de rappel élastique avantageusement formé par une lame de flexion 11 contre la partie arrière de la saillie 6a de la cale, comme illustré sur Fig. 5, pour assurer l'accrochage de la cale 6 à la pédale 1. En variante, le moyen de rappel élastique pourrait être formé par un ressort de torsion.

L'organe de maintien 10, ou élément d'accrochage, est avantageusement formé par un arceau en U renversé présentant une branche centrale munie, à chaque extrémité, d'une extension 12 orthogonale à la branche centrale, articulée sur un axe 13, parallèle à l'axe géométrique de la pédale.

La pédale 1 comporte un cliquet 14 sensible au désengagement et à l'engagement de la cale 6, 6a sur la pédale. Le cliquet 14 est propre à retenir l'organe de maintien 10 dans une position ouverte illustrée sur Fig. 4, lors du dégagement de la cale 6, à l'encontre du rappel élastique de l'élément de flexion 11, et à libérer cet organe de maintien 10 lors de l'engagement de la cale 6 comme illustré sur Fig. 5.

Le cliquet 14 comporte un prolongement 15 vers l'avant, incurvé pour passer sous le manchon 2a de la pédale et se relevant selon une partie 16 venant en avant du manchon 2a du corps de pédale. Cette partie 16 constitue une butée qui, lorsque la cale 6 est fixée sur la pédale comme illustré sur Fig. 5, s'oppose à un recul trop prononcé de la cale 6, dont la saillie avant 6b vient s'appuyer, en cas de recul, contre la partie 16 (Fig. 5).

Comme visible sur Fig. 6-8, le cliquet 14, avantageusement réalisé en matière plastique, présente une extrémité arrière 17 à section transversale pleine, sensiblement rectangulaire, d'où partent vers l'avant deux branches 15a, 15b incurvées, constituant la partie 15 passant sous le manchon 2a et se relevant pour se réunir suivant la butée 16. Les branches 15a, 15b sont écartées l'une de l'autre et déterminent entre elles un espace libre 18 dans lequel s'étend une lame-ressort 19 ancrée, notamment surmoulée dans l'extrémité 17 du cliquet. La lame-ressort 19 prend appui contre la surface arrière inférieure du manchon 2a du corps de pédale et constitue un moyen de rappel élastique du cliquet 14 dans la position de blocage de l'organe de maintien 10, en position ouverte, selon Fig. 4.

Le cliquet 14 comporte, vers le début de la partie incurvée 15, de part et d'autre en saillie vers l'extérieur, deux pions 20, alignés parallèlement à l'axe géométrique de la pédale. Ces pions 20 sont reçus dans des logements prévus dans le corps de pédale et assurent la rotation du cliquet 14 dans le corps de pédale.

L'élément de flexion 11 est situé au-dessous du cliquet 14.

Le fonctionnement de la pédale selon l'invention est le suivant. Lorsque la partie 6a de la cale 6 n'est pas enclenchée, comme illustré sur Fig. 3, la partie 17 située à l'arrière du cliquet est maintenu en position relevée par la lame-ressort 19, et conséquemment la butée 16 située à l'avant du même cliquet se trouve plus bas que la surface supérieure du corps de pédale, afin de libérer un espace important pour une entrée facilitée de la saillie 6b située à l'avant de la cale.

Lorsque le cycliste souhaite accrocher la cale 6 à la pédale 1, il présente la chaussure et la cale dans une position inclinée comme représenté sur Fig. 4 pour engager la saillie 6b dans l'espace situé en avant de la partie 15.

Le cycliste, en abaissant la partie arrière de la cale 6, fait entrer la saillie 6a dans l'espace compris entre l'organe de maintien 10 et le rebord 9, sans éprouver de résistance de la part de l'organe de maintien 10 qui est en position ouverte.

Lorsque la saillie 6a vient en contact avec le cliquet 14, le bec 8 se trouve au-dessous du rebord 9. La descente de la saillie 6a provoque l'effacement du cliquet 14 par rotation dans le sens contraire d'horloge, selon Fig. 4 et 5, de sorte que l'organe de maintien 10, rappelé par l'élément de flexion 11, vient s'appuyer contre la partie arrière de la saillie 6a dont le bec 8 s'engage sous le rebord 9.

Par suite de la rotation en sens contraire d'horloge, la butée 16, à l'avant du corps de pédale, s'est relevée comme illustré sur Fig. 5 et empêche un recul trop prononcé de la saillie 6b qui pourrait entraîner un décrochage intempestif du bec 8.

Le décrochage de la cale 6 et de la chaussure s'effectue, de manière classique, par un mouvement de torsion du pied qui assure le recul de l'organe de maintien 10 et le décrochage.

La butée 16, selon l'invention, entre le corps de pédale et la saillie 6b de la cale, permet d'éviter tout déchaussage intempestif, en particulier lorsque le cycliste, alors que la cale 6 est enclenchée et donc solidaire de la pédale, tire son pied vers l'arrière et vers le haut. Si la butée 16 se trouvait en permanence dans la position représentée sur Fig. 5, elle pourrait gêner, voire empêcher totalement le chaussage. Le basculement de cette butée 16 lorsque le cliquet 14 prend sa position relevée de Fig. 4 permet d'escamoter ladite butée 16 vers le bas et ainsi d'offrir une large fenêtre angulaire de chaussage.

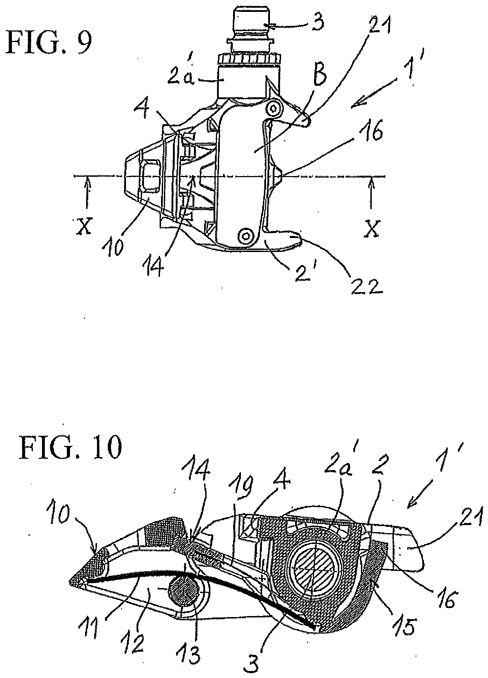

Fig.9 et 10 illustrent une variante de construction 1' d'une pédale selon l'invention. Les éléments identiques, ou ayant une fonction similaire, à des éléments déjà décrits précédemment sont désignés par les mêmes références, éventuellement affectées de l'indice « ' », sans que leur description soit reprise.

Le corps de pédale 2' présente vers l'avant, de chaque côté, une branche tronquée 21, 22. Les branches ne se rejoignent pas et délimitent un espace ouvert vers l'avant. Le poids de la pédale est ainsi réduit. La butée 16 du cliquet 14 fait saillie dans l'espace ouvert. La surface supérieure du corps de pédale, qui vient en contact avec la cale, est plane.

Le fonctionnement de la pédale 1' est le même que celui décrit précédemment. L'absence de l'arc fermant l'avant de la pédale selon Fig. 1 et 2 n'est pas gênante, car l'organe de maintien 10 est bloqué en position ouverte, ce qui facilite l'accrochage de la cale, sans avoir besoin d'un appui à l'avant de la pédale.

L'invention concerne une pédale destinée principalement au cyclisme sur route, mais n'est pas limitée à cette application.

## Revendications

1. Pédale de bicyclette à enclenchement et déclenchement automatiques, comprenant un corps (2, 2') avec manchon (2a, 2a') monté rotatif sur un axe (3) de pédale avec :
- un moyen de butée frontale (4) propre à coopérer avec une surface de butée conjuguée (5) prévue sur une cale (6) fixée sous la semelle de chaussure de l'utilisateur ;
- un organe de maintien (10) monté rotatif autour d'un axe géométrique parallèle à, et en arrière de, l'axe de la pédale, cet organe de maintien étant propre à être appliqué contre la cale par un moyen élastique de rappel (11) pour assurer l'accrochage de la cale à la pédale,
- un cliquet (14), situé en arrière de l'axe de la pédale, propre à retenir l'organe de maintien dans une position ouverte lors du dégagement de la cale à l'encontre du rappel élastique, et à libérer cet organe de maintien lors de l'engagement de la cale,
**caractérisée en ce que** le cliquet (14) comporte un prolongement (15) vers l'avant de la pédale, incurvé pour passer sous le manchon (2a, 2a') de l'axe (3) de la pédale et se relevant en avant du manchon pour constituer une butée (16) s'opposant au recul de la cale (6) et de la chaussure, la cale comportant une partie (6b) en saillie vers le bas propre à coopérer avec ledit prolongement.

2. Pédale selon la revendication 1, **caractérisée en ce que** le prolongement (15) du cliquet comporte deux branches (15a, 15b) reliées entre elles à l'arrière et à l'avant.

3. Pédale selon la revendication 2, **caractérisée en ce qu'**un moyen de rappel élastique du cliquet en position de blocage est prévu, en particulier sous la forme d'une lame ressort (19) encastrée dans la partie arrière du cliquet et prenant appui vers l'avant sous le manchon (2a, 2a') du corps de pédale.

4. Pédale selon la revendication 2 ou 3, **caractérisée en ce que** les branches (15a, 15b) du cliquet sont munies, en arrière de l'axe de la pédale, de pions (20) alignés orientés vers l'extérieur, servant d'articulation du cliquet sur le corps de pédale.

5. Pédale selon l'une quelconque des revendications précédentes, **caractérisée en ce que** le moyen élastique de rappel de l'organe de maintien (10) est formé par une lame élastique de flexion (11).

6. Cliquet pour une pédale de bicyclette à enclenchement et déclenchement automatiques selon la revendication 1, **caractérisé en ce qu'**il comporte une partie arrière (17), propre à retenir l'organe de maintien de la pédale dans une position ouverte, et un prolongement (15) vers l'avant, incurvé pour passer sous le manchon de l'axe de la pédale, et se relevant en avant du manchon pour constituer une butée (16).

7. Cliquet selon la revendication 6, **caractérisé en ce que** le prolongement (15) du cliquet comporte deux branches (15a, 15b) reliées entre elles à l'arrière et à l'avant.

8. Cliquet selon la revendication 6 ou 7, **caractérisé en ce qu'**un moyen de rappel élastique du cliquet en position de blocage est prévu, en particulier sous la forme d'une lame ressort (19) encastrée dans la partie arrière du cliquet.

9. Cliquet selon la revendication 7, **caractérisé en ce que** les branches (15a, 15b) du cliquet sont munies de pions (20) alignés orientés vers l'extérieur, servant d'articulation du cliquet sur le corps de pédale.

## Patentansprüche

1. Fahrradpedal mit automatischer Arretierung und Lösung, umfassend einen Körper (2, 2') mit einer Manschette (2a, 2a'), die drehbar auf einer Pedalachse (3) montiert ist, mit:
- einem vorderen Anschlag (4), der geeignet ist, mit einer konjugierten Anschlagfläche (5) zusammenzuwirken, die auf einem Keil (6) vorgesehen ist, der unter der Schuhsohle des Benutzers befestigt ist;
- ein Halteelement (10), das drehbar um eine geometrische Achse parallel zu und hinter der Achse des Pedals montiert ist, wobei dieses Halteelement geeignet ist, an den Keil durch ein elastisches Rückstellmittel (11) angelegt zu werden, um die Befestigung des Keils am Pedal zu gewährleisten,
- eine Rastklinke (14), die sich hinter der Achse des Pedals befindet und geeignet ist, das Halteelement in einer offenen Position bei der Freigabe des Keils gegen die elastische Rückstellung zu halten, und dieses Halteelement beim Eingreifen des Keils freizugeben,
**dadurch gekennzeichnet, dass** die Rastklinke (14) eine Verlängerung (15) nach vorne zum Pedal umfasst, die gekrümmt ist, um unter der Manschette (2a, 2a') der Achse (3) des Pedals hindurchzugehen, und sich vor der Manschette anhebt, um einen Anschlag (16) zu bilden, der sich dem Zurückweichen des Keils (6) und des Schuhs widersetzt, wobei der Keil einen nach unten herausragenden Teil (6b) umfasst, der geeignet ist, mit der Verlängerung zusammenzuwirken.

2. Pedal nach Anspruch 1, **dadurch gekennzeichnet, dass** die Verlängerung (15) der Rastklinke zwei Schenkel (15a, 15b) umfasst, die hinten und vorne miteinander verbunden sind.

3. Pedal nach Anspruch 2, **dadurch gekennzeichnet, dass** ein elastisches Rückstellmittel der Rastklinke in Blockierposition vorgesehen ist, insbesondere in Form eines Federblattes (19), das in den hinteren Teil der Rastklinke einsteckt ist und nach vorne hin unter der Manschette (2a, 2a') des Pedalkörpers anliegt.

4. Pedal nach Anspruch 2 oder 3, **dadurch gekennzeichnet, dass** die Schenkel (15a, 15b) der Rastklinke hinter der Achse des Pedals mit nach außen gerichteten fluchtenden Stiften (20) versehen sind, die als Gelenk für die Rastklinke auf dem Pedalkörper dienen.

5. Pedal nach einem der vorhergehenden Ansprüche, **dadurch gekennzeichnet, dass** das elastische Rückstellmittel des Halteelements (10) von einem elastischen Biegungsblatt (11) gebildet ist.

6. Rastklinke für ein Fahrradpedal mit automatischer Arretierung und Lösung nach Anspruch 1, **dadurch gekennzeichnet, dass** sie einen hinteren Teil (17), der geeignet ist, das Halteelement des Pedals in einer offenen Position zu halten, und eine Verlängerung (15) nach vorne umfasst, die gekrümmt ist, um unter der Manschette der Achse des Pedals hindurchzugehen, und sich vor der Manschette anhebt, um einen Anschlag (16) zu bilden.

7. Rastklinke nach Anspruch 6, **dadurch gekennzeichnet, dass** die Verlängerung (15) der Rastklinke zwei Schenkel (15a, 15b) umfasst, die hinten und vorne miteinander verbunden sind.

8. Rastklinke nach Anspruch 6 oder 7, **dadurch gekennzeichnet, dass** ein elastisches Rückstellmittel der Rastklinke in Blockierposition vorgesehen ist, insbesondere in Form eines Federblatts (19), das in den hinteren Teil der Rastklinke eingesteckt ist.

9. Rastklinke nach Anspruch 7, **dadurch gekennzeichnet, dass** die Schenkel (15a, 15b) der Rastklinke mit nach außen gerichteten fluchtenden Stiften (20) versehen sind, die als Gelenk der Rastklinke auf dem Pedalkörper dienen.

## Claims

1. Bicycle pedal with automatic engagement and disengagement, comprising a body (2, 2') with a sleeve (2a, 2a') mounted with the ability to rotate on a pedal spindle (3) with:
- a front stop means (4) able to collaborate with a mating stop surface (5) provided on a cleat (6) fixed underneath the sole of the shoe of the user;
- a retaining member (10) mounted with the ability to rotate about a geometric axis parallel to and to the rear of the pedal spindle, this retaining member being able to be pressed against the cleat by an elastic return means (11) so as to fasten the cleat to the pedal,
- a pawl (14), situated to the rear of the pedal spindle, capable of holding the retaining member in an open position as the cleat is disengaged against the action of the elastic return, and of releasing this retaining member as the cleat engages, **characterized in that** the pawl (14) comprises an extension (15) towards the front of the pedal, which is curved so as to pass under the sleeve (2a, 2a') of the pedal spindle (3) and curl up in front of the sleeve to constitute a stop (16) that opposes rearward movement of the cleat (6) and of the shoe, the cleat comprising a downwardly projecting part (6b) able to collaborate with the said extension.

2. Pedal according to Claim 1, **characterized in that** the extension (15) of the pawl comprises two branches (15a, 15b) joined together at the rear and at the front.

3. Pedal according to Claim 2, **characterized in that** a means is provided for elastically returning the pawl to the blocking position, this means in particular taking the form of a spring leaf (19) set into the rear part of the pawl and bearing towards the front under the sleeve (2a, 2a') of the pedal body.

4. Pedal according to Claim 2 or 3, **characterized in that** the branches (15a, 15b) of the pawl are equipped, to the rear of the pedal spindle, with aligned pins (20) oriented outwards, used to articulate the pawl to the pedal body.

5. Pedal according to any one of the preceding claims, **characterized in that** the elastic return means acting on the retaining member (10) is formed of an elastic blade (11) operating in bending.

6. Pawl for a bicycle pedal with automatic engagement and disengagement according to Claim 1, **characterized in that** it comprises a rear part (17) able to hold the retaining member of the pedal in an open position, and a forwards extension (15) which is curved so that it passes under the sleeve of the pedal spindle and curls up at the front of the sleeve to constitute a stop (16) .

7. Pawl according to Claim 6, **characterized in that** the extension (15) of the pawl comprises two branches (15a, 15b) joined together at the rear and at the front.

8. Pawl according to Claim 6 or 7, **characterized in that** a means is provided for elastically returning the pawl to the blocking position, this means in particular taking the form of a spring leaf (19) set into the rear part of the pawl.

9. Pawl according to Claim 7, **characterized in that** the branches (15a, 15b) of the pawl are equipped with aligned pins (20) oriented outwards, used to articulate the pawl to the pedal body.
